# EUROPÄISCHE PATENTSCHRIFT

(11) **EP 2 655 466 B1**
(45) Veröffentlichungstag und Bekanntmachung des Hinweises auf die Patenterteilung: **15.10.2014**
(21) Anmeldenummer: 11807904.5
(22) Anmeldetag: 20.12.2011
(51) Int. Cl.: C08G 18/32, C08G 18/36, C08G 18/48, C09J 175/04

(54) **KLEBSTOFF FÜR ROTORBLÄTTER FÜR WINDKRAFTANLAGEN**
ADHESIVE FOR ROTOR BLADES FOR WIND POWER PLANTS
ADHÉSIF POUR PALES DE ROTOR POUR ÉOLIENNES

(30) Priorität: 24.12.2010 EP 10196962
(43) Veröffentlichungstag der Anmeldung: 30.10.2013
(73) Patentinhaber: Sika Technology AG, 6340 Baar (CH)
(72) Erfinder: PIND, Martin, Suzhou Industrial Park Suzhou 215121 (CN); OLSEN, Bodil, DK-3320 Skaevinge (DK)
(74) Vertreter: Sika Patent Attorneys
(86) Internationale Anmeldenummer: PCT/EP2011/073392
(87) Internationale Veröffentlichungsnummer: WO 2012/084937

(56) Entgegenhaltungen:
- EP-A1- 1 690 880
- WO-A1-02/066572
- WO-A1-2009/080740

## Beschreibung

### Technisches Gebiet

Die Erfindung betrifft das Gebiet der zweikomponentigen Polyurethanklebstoffe, insbesondere der strukturellen zweikomponentigen Polyurethanklebstoffe und insbesondere das Gebiet der Verklebung von Rotorblättern für Windkraftanlagen.

### Stand der Technik

Zweikomponentige Polyurethanklebstoffe auf Basis von Polyolen und Polyisocyanaten werden bereits seit langem eingesetzt. Zweikomponentige Polyurethanklebstoffe haben den Vorteil, dass sie nach dem Mischen auch bei nicht erhöhter Umgebungstemperatur ("Kalthärtung") schnell aushärten und deshalb bereits nach kurzer Zeit schnell höhere Kräfte aufnehmen können. Für den Einsatz als strukturelle Klebstoffe werden jedoch hohe Ansprüche in Bezug auf Festigkeiten und Klebkräfte an solche Klebstoffe gestellt, da derartige Klebstoffe Elemente von tragenden Strukturen darstellen. Hohe Festigkeiten werden üblicherweise durch hohe Vernetzungsdichte erreicht. Dies wird üblicherweise durch die Erhöhung der Konzentration an funktionellen Gruppen und den Einsatz von höherfunktionellen Polyolen oder Polyamine und höher funktionellen Polyisocyanaten erreicht.

WO 2006/084900 A2 offenbart einen zweikomponentigen Polyurethanklebstoff, welcher als struktureller Klebstoff einsetzbar ist.

Insbesondere für den Bau von Rotorblättern für Windkraftanlagen, wo vorgefertigte Flügelhalbschalen mit einer Tragwerkstruktur und zusätzlich miteinander passgenau verklebt werden müssen, weisen die bisherigen zweikomponentige Polyurethanklebstoffe jedoch das grosse Problem auf, dass sie über eine lange Offenzeit verfügen müssen, damit der Klebstoff grossflächig aufgetragen werden und der Fügevorgang zeitversetzt stattfinden kann. Das Vorhandensein von erhöhter Luftfeuchtigkeit führt vermehrt zur Nebenreaktion der Isocyanatgruppen in der Isocyanat-Komponente mit Wasser. Dabei werden zusätzliche Iscocyanat-Gruppen verbraucht, die nicht mehr zum Aufbau eines vernetzten Polyurethans zur Verfügung stehen. Darüber hinaus kann es zur Schäumung des Klebstoffs durch Kohlendioxidentwicklung kommen. In der Folge können sich bei hoher Luftfeuchtigkeit, wie sie bei üblichen saisonalen Schwankungen oder aufgrund klimatischer Besonderheiten am Verarbeitungsort zu beobachten ist, zum einen die Reaktion des Klebstoffs mit Luftfeuchtigkeit insbesondere die Offenzeit des Klebstoffs stark verkürzen sowie die mechanischen Eigenschaften des ausgehärteten Klebstoffs stark verschlechtern.

WO 2009/080740 A1 offenbart einen zweikomponentigen Polyurethanklebstoff, welcher für das Verkleben von Faserformteilen geeignet ist und sich durch die Kombination eines hochmolekularen Polyesterdiols, eines hochfunktionellen Polyols, eines hydrophoben Polyols und weiterer Hilfsstoffe auszeichnet. Diese Klebstoffe weisen jedoch hohe Steifigkeit mit Werten für den E-Modul von mehr als 2'000 MPa auf und sind insbesondere in den mechanischen Eigenschaften im Sinne einer Verbesserung der mechanischen Zähigkeit noch verbesserungsfähig.

### Darstellung der Erfindung

Die Aufgabe der vorliegenden Erfindung ist es daher, zweikomponentige Polyurethanzusammensetzungen zur Verfügung zu stellen, welche einerseits über eine lange Offenzeit verfügen und nach Applikation auf einem Substrat und nach längerer Exposition gegenüber einem Klima mit hoher Luftfeuchtigkeit (z.B. 70% relative Luftfeuchtigkeit) auch nach 40 Minuten, insbesondere auch noch nach 60 Minuten, gefügt (verklebt) und zu Polymeren mit hoher mechanischer Festigkeit ausgehärtet werden können, und so eine strukturelle Verklebung hergestellt wird.

Überraschenderweise wurde nun gefunden, dass eine zweikomponentige Polyurethanzusammensetzung gemäss Anspruch 1 in der Lage ist, dieses Problem zu lösen.

Es zeigte sich, dass diese Zusammensetzungen sich aufgrund ihrer mechanischen Eigenschaften optimal für den Einsatz als strukturelle Klebstoffe für das Verkleben von grossflächigen Formteilen, insbesondere von Rotorblatt-Halbschalen beim Bau von Windkraftanlagen, eignen. Insbesondere zeigte sich, dass die erfindungsgemässen Klebstoffe ein besonders gutes Gleichgewicht zwischen Zugfestigkeit und Bruchdehnung sowie E-Modul im Sinne eines zäh-elatisch modifizierten Materials aufweisen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine zweikomponentige Polyurethanzusammensetzung, welche aus einer Polyolkomponente **(K1**) und einer Polyisocyanatkomponente **(K2)** besteht.

Die Polyolkomponente **(K1**) umfasst hierbei
Rizinusöl **(A0)**;
mindestens ein alkoxyliertes aromatisches Diol **(A1**); und
mindestens ein Polyol mit 5 bis 8 Hydroxylgruppen **(A2).**

Die Polyisocyanatkomponente **(K2)** umfasst hierbei mindestens ein Polyisocyanat **(B1**).

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommende funktionelle Gruppe pro Molekül enthält.

Die Polyolkomponente **(K1**) umfasst Rizinusöl **(A0).** Rizinusöl ist ein natürlich nachwachsender Rohstoff und wird aus dem Samen der Rizinusstaude (Ricinus communis, Wolfsmilchgewächs) gewonnen. Im Wesentlichen ist Rizinusöl ein Trigylycerid. Die Rizinolsäure weist sekundäre Hydroxylgruppen auf. Demzufolge stellt Rizinusöl ein hydrophobes Polyol dar. Das Rizinusöl kann roh oder aufgereinigt eingesetzt werden. Als besonders geeignet hat sich der Einsatz von Rizinusöl mit einem reduzierten Gehalt an freien Fettsäuren (low FFA castor oil) erwiesen. Vorzugsweise wird Rizinusöl mit einem Gehalt an freien Fettsäuren von weniger als 5 Gew.-%, insbesondere von zwischen 1 und 4 Gew.-%, verwendet.

Die Verwendung von Rizinusöl als wieder nachwachsendem Naturprodukt in technischen Produkten ist ökologisch äusserst wertvoll und deshalb sehr vorteilhaft.

Es ist vorteilhaft, wenn der Anteil von Rizinusöl **(A0)** in der Polyolkomponente **(K1**) zwischen 5 und 30 Gew.-%, insbesondere zwischen 10 und 25 Gew.-%, bevorzugt zwischen 14 und 20 Gew.-%, ist.

Die Polyolkomponente **(K1**) umfasst mindestens ein alkoxyliertes aromatisches Diol **(A1).**

Unter einem "aromatischen Diol" wird hier und im Folgenden ein Diol verstanden, welches als zentrale Einheit mindestens einen aromatischen Kern und zwei Hydroxylgruppen aufweist. Im Diol können auch mehrere aromatische Kerne vorhanden sein. Vorzugsweise handelt es sich bei den Hydroxylgruppen nicht um phenolische Gruppen, d.h. sie sind vorteilhaft nicht unmittelbar am aromatischen Kern angeordnet.

Der aromatische Kern kann auch kondensiert und/oder eine heteroaromatisch und/oder weitere Substituenten aufweisen. In einem heteroaromatischen Kern sind Heteroatome vorhanden, die Teil des aromatischen Rings oder Ringsystems sind.

Beispiele von derartigen aromatischen Kernen sind substituierte Formen von Benzol, Naphthalin, Anthracen, Phenanthren, Imidazol, Pyridin, Pyrrol, Pyrimidin, Pyrazin, Chinolin, Phenazin. Beispiele von Diolen mit mehreren aromatischen Kernen sind Diole mit dem Grundgerüst eines Biphenyls, Terphenyls, 2,2'-Bipyridins, Diphenylmethans, 1,1-Diphenylethans oder 2,2-Diphenylpropans.

Besonders geeignet haben sich aromatische Diole gezeigt, die aus Phenol und aus Formaldehyd, Acetaldehyd oder Aceton oder Mischungen daraus hergestellt werden, insbesondere Bisphenol-A, Bisphenol-F oder Bisphenol-A/F.

Vorzugsweise handelt es sich beim alkoxylierten aromatischen Diol **(A1**) um ein ethoxyliertes und/oder propoxyliertes, aromatisches Diol.

Derartige alkoxylierte Diole weisen bevorzugt die Struktur der Formel (I) auf.

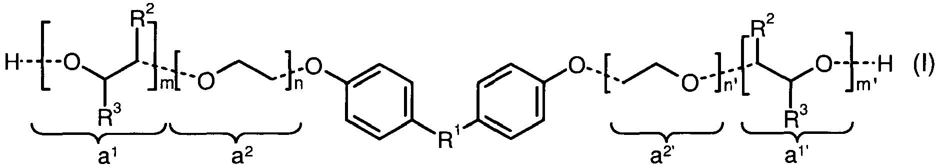

Hierbei stellt der Substituent R¹ eine Gruppe CH₂, CH(CH₃) oder C(CH₃)₂ dar.

Die Indizes n, n', m und m' sind jegliche Werte, derart dass n+n'+m+m' = 1 bis 20, insbesondere n+n'+m+m' = 1 bis 8 beträgt.

Weiterhin stellen die Substituenten R² und R³ je nachdem R² = H und R³ = Methyl oder R² = Methyl und R³ = H dar.

Die Segmente a¹ und a^{1'} bedeuten eine Oxypropyleneinheit (PO) und a² und a^{2'} eine Oxyethyleneinheit (EO). Die gestrichelten Linien in Formel (I) stellen schematisch dar, dass die Abfolge der aneinander gebundenen Alkylenglykol-Segmente a¹, a^{1'}, a² und a^{2'} variabel ist. So ist eine blockweise oder eine abwechselnde oder eine zufällige Reihenfolge dieser Oxyalkyleneinheiten möglich. Die Herstellung von derartig alkoxylierten aromatischen Diolen erfolgt auf eine dem Fachmann bekannte Art und Weise.

Es ist dem Fachmann weiterhin klar, dass bei einer Alkoxylierung eines Diols auch durchaus auch Moleküle mit unterschiedlichem Alkoxylierungsgrad in den beiden von der zentralen Einheit ausgehenden Ketten entstehen können. Weiterhin ist es dem Fachmann auch klar, dass bei Alkoxylierungen stets Verteilungen von unterschiedlichen Molekülen auftreten. Dies zeigt sich in unter anderem auch darin, dass der Totalalkoxylierungsgrad ("*TAG*" = n+n'+m+m') auch ungeradzahlig sein oder einen nicht-ganzzahligen Wert annehmen kann.

Rein propoxylierte aromatische Diole der Formel (I) sind gegenüber rein ethoxylierten oder EO/PO-gemischt alkoxylierten aromatischen Diolen der Formel (I) bevorzugt, d.h. bevorzugt ist n = n' =0.

Besonders bevorzugt ist das aromatischen Diol **(A1**) ein Diol der Formel (I) mit R¹ = CH₂ oder C(CH₃)₂H, insbesondere C(CH₃)₂.

Als meist bevorzugt gezeigt haben sich aromatische Diole **(A1**) der Formel (I) mit R¹ = C(CH₃)₂, n=n'=0 und mit einem Totalalkoxylierungsgrad zwischen 2 und 16, insbesondere zwischen 2.5 und 16, bevorzugt 3 bis 12.

Es kann vorteilhaft sein, dass die zweikomponentige Polyurethanzusammensetzung auch Mischungen unterschiedlicher aromatischen Diole **(A1**) enthält.

Das aromatische Diol **(A1**) wird bevorzugt in einer Menge von 2 bis 15 Gew.-%, bezogen auf die gesamte Zusammensetzung, eingesetzt.

Es ist vorteilhaft, wenn der Anteil von aromatischem Diol (A1) in der Polyolkomponente **(K1**) zwischen 5 und 15 Gew.-%, insbesondere 8 - 15 Gew.-%, ist.

Die Polyolkomponente **(K1**) umfasst mindestens ein Polyol mit 5 bis 8 Hydroxylgruppen (A2). Derartig hochfunktionelle Polyole werden in der Klebstoffbranche normalerweise als Polyole relativ selten verwendet, da sie stark vernetzend wirken und deshalb in den meisten Systemen zur Versprödung führen. Insbesondere geeignet sind Zuckeralkohole sowie auf Zuckeralkohol basierende Polyole, die eine entsprechende Anzahl von OH-Gruppen aufweisen, insbesondere Pentite oder Hexite oder solche auf Basis von Disacchariden. Es können auch die entsprechenden Zucker eingesetzt werden, insbesondere handelt es sich jedoch um die hydrierten Zuckeralkohole. Beispiele sind Sorbitol, Inositol, Mannitol, Adonitol, Ribitol, Xylitol, Dulcitol, Glucose, Galactose, Mannose, Allose, Altrose, Gulose, Idose, Talose, Fructose, Sorbose, Psicose, Saccharose, Lactose, Trehalose, Maltose, Cellobiose, Melibiose sowie Rutinose. Es können auch die entsprechenden Ethoxylierungs- und Propoxylierungsprodukte mit bis zu 15 Alkylenoxideinheiten eingesetzt werden.

Das Molekulargewicht solcher Polyole mit 5 bis 8 Hydroxylgruppen (A2) kann 120 bis 3000 g/mol, insbesondere 250 bis zu 2000 g/mol, betragen.

Es können auch Polyetherpolyole eingesetzt werden. Beispiele dafür sind Umsetzungsprodukte aus 5 bis 6 funktionellen Alkoholen, die durch Umsetzung mit Ethylenoxid oder Propylenoxid hergestellt werden können.

Eine weitere Gruppe von geeigneten Polyetherpolyolen sind die Polytetramethylenglykole, insbesondere Poly(THF)diole, die z.B. durch die saure Polymerisation von Tetrahydrofuran hergestellt werden können. Dabei liegt das Molekulargewicht dieser Polyetherpolyole im Allgemeinen zwischen 200 und 6000 g/mol, vorzugsweise im Bereich von 400 bis 3000 g/mol.

Die Polyole mit 5 bis 8 Hydroxylgruppen **(A2)** weisen aufgrund der hohen Anzahl der reaktiven OH-Gruppen eine höhere Polarität auf. Sie sind deshalb auch zumindest teilweise mit Wasser mischbar.

Das Polyol mit 5 bis 8 Hydroxylgruppen **(A2)** basiert vorzugsweise auf Sorbitol. Besonders bevorzugt weist das Polyol mit 5 bis 8 Hydroxylgruppen **(A2)** lediglich sekundäre Hydroxylgruppen auf.

Es ist vorteilhaft, wenn der Anteil vom Polyol mit 5 bis 8 Hydroxylgruppen **(A2)** in der Polyolkomponente **(K1**) zwischen 5 und 30 Gew.-%, insbesondere zwischen 0.5 und 20 Gew.-%, bevorzugt 1 - 10 Gew.-%, ist.

Besonders bevorzugt ist es, wenn die Polyolkomponente **(K1**) weiterhin mindestens ein aliphatisches Triol **(A3)** enthält. Beim aliphatischen Triol **(A3)** handelt es sich um ein aliphatisches Triol mit vorzugsweise einem Molekulargewicht von 360 bis 6000 g/mol, entsprechend einem OH-Equivalenzgewicht von 120 bis 2000, insbesondere einem Molekulargewicht von 120 bis 2000 g/mol, bevorzugt von 160 bis 1700 g/mol.

Es gibt unterschiedliche Arten von derartigen aliphatischen Triolen. So können sie beispielsweise Urethan- und/oder Harnstoff- und/oder Ethergruppen enthalten. Die Gestalt der Triole kann sehr unterschiedlich sein. So sind beispielsweise sternförmige oder kammförmige Triole möglich. Es ist weiterhin möglich, dass im Triol sowohl primäre als auch sekundäre Hydroxylgruppen vorhanden sind. Bevorzugt sind alle drei Hydroxylgruppen primäre Hydroxylgruppen.

Beispielsweise lassen sich aliphatischen Triole (A3) aus einem aliphatischen Triisocyanat, insbesondere aus einem Isocyanurat, welches aus drei Diisocyanat-Molekülen gebildet wird, im Überschuss von aliphatischen Diolen, insbesondere von Polyetherdiolen, gegebenenfalls durch weitere Nachverlängerung mittels aliphatischen Diisocyanaten und aliphatischen Diolen, erreichen.

Weitere beispielhafte aliphatischen Triole **(A3)** können aus niedermolekularen aliphatischen Triolen, wie zum Beispiel Trimethylolpropan oder Glycerin, und einem aliphatischen Diisocyanat und nachfolgender Reaktion mit einem aliphatischen Diol erhalten werden.

Weiterhin beispielhafte aliphatischen Triole **(A3)** sind Produkte einer Alkoxylierungsreaktion von niedermolekularen aliphatischen Triolen, wie zum Beispiel Trimethylolpropan oder Glycerin. Besonders handelt es sich hierbei um ethoxylierte, oder propoxylierte oder butoxylierte aliphatische Triole, insbesondere von Trimethylolpropan oder Glycerin.

Es kann vorteilhaft sein, dass die zweikomponentige Polyurethanzusammensetzung auch Mischungen unterschiedlicher aliphatischer Triole (A3) enthält. Insbesondere hat sich als vorteilhaft gezeigt, dass Mischungen eines aliphatischen Triols (A3) mit einem tieferen Molekulargewicht, insbesondere zwischen 360 und 2700 g/mol, mit einem aliphatischen Triol (A3) mit einem höheren Molekulargewicht, insbesondere zwischen 4200 und 6000 g/mol, eingesetzt werden.

Weiter bevorzugt ist das aliphatisches Triol **(A3)** ein alkoxyliertes aliphatisches Triol, insbesondere mit einem Molekulargewicht zwischen 500 und 1000 g/mol, bevorzugt zwischen 550 und 800 g/mol. Bevorzugt sind propoxyliert und insbesondere butoxylierte Triole. Eine derartige Alkoxylierung erfolgt insbesondere durch Behandlung des aliphatischen Triols mittels Ethylenoxid, Propylenoxid oder Butylenoxid.

Als meist bevorzugt gilt ein butoxyliertes Trimethylol mit einem Totalalkoxylierungsgrad zwischen 7 und 10.

Es ist vorteilhaft, wenn der Anteil vom aliphatischen Triol **(A3)** in der Polyolkomponente **(K1**) 30 Gew.-% nicht übersteigt. Bevorzugt ist der Anteil 0 - 25 Gew.-%, besonders bevorzugt 7 - 25 Gew.-%.

Es ist weiterhin bevorzugt, wenn die Polyolkomponente **(K1**) weiterhin mindestens ein Polyether- und/oder Polyesterpolyol auf Basis von Rizinusöl oder Sojabohnenöl **(A4)** aufweist. Bevorzugt als solche Polyether- und/oder Polyesterpolyole **(A4)** sind Umsetzungsprodukte von Rizinusöl mit Ketonharzen, insbesondere solche, wie sie beispielsweise von Bayer unter der Bezeichnung Desmophen® 1150 und von Cognis unter der Bezeichung Sovermol® 805 vertrieben werden.

Weiterhin ist es bevorzugt, wenn die Polyolkomponente **(K1**) weiterhin mindestens ein Polyamin **(PA)** in einer Menge von 0.5 bis 5 Gew.-%, bevorzugt von 1.5 -bis 2.5 Gew.-%, enthält.

Geeignete Polyamine **(PA)** sind übliche in der Polyurethanchemie verwendete Polyamine, insbesondere Diamine. Besonders geeignet sind jedoch eher hydrophobe Polyamine, insbesondere aromatische Polyamine. Besonders bevorzugte Polyamine **(PA)** sind aromatische Diamine, welche die Formel (II) aufweisen: 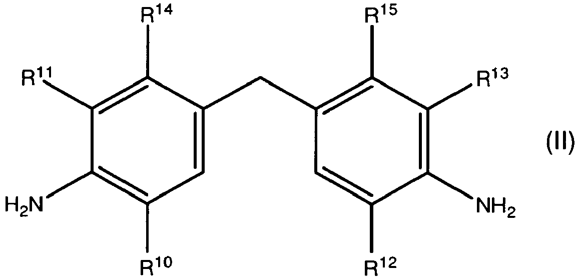 Hierbei stehen R¹⁰, R¹¹, R¹² und R¹³ je für H oder eine lineare oder verzweigte C₁- bis C₄- Alkylgruppe, mit der Massgabe, dass R¹¹ und R¹³ nicht gleichzeitig für H stehen. Weiterhin stehen R¹⁴ und R¹⁵ je für H oder ein Chloratom.

Insbesondere bevorzugt sind 4,4'-Methylenebis-(3-chloro, 2,6-diethyl)-anilin, 4,4'-Methylenebis(3-chloro-2,6-diethylanilin), 4,4'-Methylenebis(2,6-diethylanilin), 4,4'-Methylenebis(2,6-diisopropylanilin) und 4,4'-Methylenebis(2-isopropyl-6-methylanilin).

Derartige aromatische Polyamine sind gegenüber anderen aromatischen Polyaminen bevorzugt, da es sich hierbei um toxikologisch vorteilhafte aromatische Polyamine handelt.

Besonders bevorzugt ist das Polyamine **(PA)** 4,4'-Methylenebis(2,6-diethylanilin).

Weiterhin kann die Polyolkomponente **(K1**) noch andere Bestandteile umfassen. Vorteilhaft werden Aushärtungskatalysatoren eingesetzt. Derartige Katalysatoren sind dem Fachmann für die Reaktion von Polyisocyanaten mit Polyolen, gegebenenfalls auch für mit Polyaminen oder Wasser, bekannt. Als Beispiele für derartige Katalysatoren seien Zinn-, Zink- und Wismut-organische Metallkatalysatoren, z.B. Dibutylzinndilaurat, oder tertiäre Amine, z.B. 1,4-Diazobicyclo[2.2.2]octan (DABCO), erwähnt.

Durch die Auswahl und Konzentration von geeigneten Polyaminen (PA) sowie Katalysatoren kann die Topfzeit und das Härtungsverhalten sowie die Viskosität der Mischung der Komponenten **(K1** und **K2),** bzw. die Standfestigkeit des applizierten Klebstoffs, vorteilhaft beeinflusst werden.

Besonders bevorzugt sind zweikomponentige Polyurethanzusammensetzungen, welche eine die Polyolkomponente **(K1**) aufweisen, welche enthält:
10 - 25 Gew.-% Rizinusöl **(A0)**;
8 -15 Gew.-% alkoxyliertes aromatisches Diol **(A1**)
1 - 10 Gew.-% Polyol mit 5 bis 8 Hydroxylgruppen **(A2)**
0 - 25 Gew.-%, bevorzugt 7 - 25 Gew.-%, aliphatisches Triol **(A3).**

Die Polyisocyanatkomponente **(K2)** umfasst mindestens ein Polyisocyanat **(B1**).

Als Polyisocyanat **(B1**) besonders geeignet sind einerseits Polyisocyanate **(B1'),** die neben zwei oder mehreren freien Isocyanat-Gruppen mindestens eine Harnstoff- oder eine Urethan- oder eine Biuret- oder eine Uretdiongruppe aufweisen.

Bevorzugt ist das Polyisocyanat **(B1**) ein aromatisches Polyisocyanat. Insbesondere geeignet sind Diphenylmethandiisocyanat (2,4'- und/oder 4,4'-MDI), sowie MDI-basierende Polyisocyanate. Als besonders geeignet haben sich einerseits Polyisocyanate vom Typ, wie sie kommerziell als Desmodur® VH 20 von Bayer erhältlich sind, gezeigt. Weiterhin geeignete Polyisocyanate **(B1')** sind Isocyanurate oder Biurete eines Diisocyanates, insbesondere von HDI und/oder IPDI und/oder TDI.

Es ist durchaus möglich, dass Mischungen von Polyisocyanaten B1' eingesetzt werden.

In einer bevorzugten Ausführungsform wird eine Mischung von ein-und mehrkernigem MDI (sogenanntes Polymeres MDI) eingesetzt. Als besonders bevorzugt als Polyisocyanat **(B1**) hat sich Desmodur® VKS20F von Bayer gezeigt.

Andererseits als Polyisocyanat **(B1)** besonders geeignet haben sich Polyurethanprepolymere **(B1**"), welche mindestens zwei Isocyanat-Gruppen aufweisen, und welche aus einer Reaktion von mindestens einem Polyisocyanat mit einem Molekulargewicht von kleiner als 300 g/Mol, insbesondere von zwischen 150 g/Mol und 270 g/Mol, mit mindestens einem Polyol **(AB1),** gebildet werden. Als Polyol **(AB1)** sind insbesondere Polyole geeignet, welche ausgewählt sind aus der Gruppe umfassend Polyetherpolyole, Polyesterpolyole, Polycarbonatpolyole, Polyole gebildet aus ungesättigten Monomeren und deren Mischungen. Die Herstellungsweise derartiger Isocyanat-Gruppen aufweisender Polyurethanprepolymer erfolgt in bekannter Art und Weise und erfolgt typischerweise im stöchiometrischen Überschuss des Polyisocyanates gegenüber dem Polyol. Hierfür eingesetzte Polyisocyanate sind insbesondere 2,4- und 2,6-Toluylendiisocyanat (TDI), 2,4'- und 4,4'-Diphenylmethandiisocyanat (MDI), 1,6-Hexamethylendiisocyanat (HDI) sowie deren Isomerengemische und Mischungen untereinander. Als besonders bevorzugt gilt MDI.

Als Polyetherpolyole, auch Polyoxyalkylenpolyole genannt, gelten Polymerisationsprodukte von Ethylenoxid, 1,2-Propylenoxid, 1,2- oder 2,3-Butylenoxid, Tetrahydrouran oder Mischungen davon, gegebenenfalls sind sie polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2-und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Besonders geeignet sind Polyoxyalkylendiole oder Polyoxyalkylentriole, insbesondere Polyoxypropylendiole oder Polyoxypropylentriole.

Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxypropylendiole und -triole mit einem Molekulargewicht von 400 bis 8'000 g/mol. Unter "Molekulargewicht" oder "Molgewicht" versteht man im vorliegenden Dokument stets das zahlenmittlere Molekulargewicht Mₙ.

Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

Als Polyesterpolyole gelten insbesondere Polyole, welche beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylol-propan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, hergestellt werden sowie Polyesterpolyole aus Lactonen, wie beispielsweise ε-Caprolacton.

Als Polycarbonatpolyole sind insbesondere solche bevorzugt, welche durch Umsetzung der oben genannten - zum Aufbau der Polyesterpolyole eingesetzten - Alkohole mit Dialkylcarbonaten, Diarylcarbonaten oder Phosgen zugänglich sind.

Als "Polyole gebildet aus ungesättigten Monomeren" sind insbesondere derartige Polyole zu verstehen, welche aus der Polymerisation von mindestens einem der Monomere ausgewählt aus der Gruppe umfassend Ethylen, Propylen, Butylen, Butadien, Isopren, Styrol, Vinylalkohol, Vinylether, Vinylester, Acrylonitril, Säuren, Amide und Ester der Acrylsäure, Methacrylsäure, Maleinsäure, Fumarsäure, Crotonsäure und Itaconsäure sowie deren Mischungen hergestellt sind.

Als besonders geeignete Polyole gebildet aus ungesättigten Monomeren gelten hydroxyfunktionelle Polybutadiene wie Polybutadienpolyole und hydrierte Polybutadienpolyole, sowie Poly(meth)acrylatpolyole. Unter "(Meth)acrylat" werden hier und im Folgenden des vorliegenden Dokuments stets Ester sowohl der Acrylsäure als auch der Methacrylsäure verstanden. Ebenso bezeichnet "(Meth)acrylsäure" sowohl Acrylsäure als auch Methacrylsäure.

Als "Poly(meth)acrylatpolyole" werden hierbei Polymere verstanden, welche Copolymere eines hydroxy-funktionellen (Meth)acrylsäureesters und mindestens eines weiteren Monomers, welches ausgewählt ist aus der Gruppe umfassend die Monomere Acrylsäure, Methacrylsäure, C₁-C₁₈-Alkylester der Acrylsäure oder Methacrylsäure, Styrol, Vinylester und Vinylalkohol. Als hydroxy-funktioneller (Meth)acrylsäureester werden bevorzugt Hydroxyethyl-(meth)acrylat, Hydroxypropyl(meth)acrylat und Hydroxybutyl(meth)acrylat.

Diese genannten Polyole **(AB1)** weisen bevorzugt ein mittleres Molekulargewicht von 250 bis 30'000 g/mol, insbesondere von 1'000 bis 8'000 g/mol, und sind bevorzugt Diole oder Triole, insbesondere mit einer mittleren OH-Funktionalität im Bereich von 1.6 bis 3.

In einer bevorzugten Ausführungsform wird eine Mischung von Polyolen **(AB1)** eingesetzt, die eine Mischung von Diolen und Triolen ist.

In einer Ausführungsform der Erfindung umfasst die Polyisocyanat-komponente (K2) mindestens ein Polyisocyanat **(B1')** und mindestens ein Polyisocyanat Polyurethanprepolymer **(B1").**

Die Polyolkomponente **(K1**) und / oder die Polyisocyanatkomponente (K2) können neben den bereits erwähnten weitere Bestandteile, wie sie der Fachmann aus der Zweikomponenten-Polyurethanchemie her kennt, aufweisen. Diese können in nur einer Komponente oder in beiden vorhanden sein. Als derartig zusätzliche Bestandteile werden beispielsweise Lösungsmittel, Weichmacher und/oder Extender Füllstoffe, wie Russe, Kreiden oder Talke, Haftvermittler, insbesondere Trialkoxysilane, sowie Thixotropiermittel, wie amorphe Kieselsäuren, und Trockenmittel, wie Zeolithe, eingesetzt.

Wie der Fachmann für Polyurethanklebstoffe weiss, muss bei der Herstellung der Komponenten, insbesondere bei der Polyisocyanatkomponente (K2), darauf geachtet werden, dass die Rohstoffe möglichst frei von Wasser sind und dass während und nach deren Herstellung möglichst keine Feuchtigkeit in Kontakt mit der Komponente treten kann. Dies wird einerseits durch ein physikalisches oder chemisches Trocknen der Ausgangssubstanzen sowie durch das Arbeiten unter Inertgas, üblicherweise Stickstoff, oder durch Arbeiten unter Vakuum erreicht.

Die Komponenten **(K1, K2)** werden vorteilhaft derart formuliert, dass das Volumenverhältnis von Polyolkomponente **(K1**) und Polyisocyanatkomponente **(K2)** zwischen 1:3 und 3:1, insbesondere zwischen 1:2 und 2:1, beträgt. Besonders bevorzugt beträgt dieses Verhältnis in etwa 1:1. Das Mischverhältnis ist vorzugsweise derart, dass die NCO-Gruppen der Polyisocyanatkomponente **(K2)** stöchiometrisch zu den NCO-reaktiven Gruppen, typischerweise OH-Gruppen, der Polyolkomponente **(K1**) erfolgt. Erfolgt die Mischung nicht im Wesentlichen stöchiometrisch, d.h. mit Abweichungen von mehr als 5%, erfolgt die Reaktion der Polyolkomponente **(K1)** und der Polyisocyanatkomponente **(K2)** nicht optimal, was zu einer Reduktion in den mechanischen Eigenschaften der ausgehärteten Polyurethanzusammensetzung führt. Dies trifft vor allem für einen Überschuss der Polyolkomponente zu. Beim Vorliegen eines Überschusses an Polyisocyanat ist dies zwar grundsätzlich ebenfalls nachteilig, aber durch die nachträgliche Reaktion der nicht umgesetzten Isocyanat-Gruppen mit Feuchtigkeit, beispielsweise von der Luftfeuchtigkeit herrührend, welche gegebenenfalls zu weiteren Vernetzungen führen kann, können Defekte in der Polyurethannetzwerkstruktur und daraus resultierende verschlechterte mechanische Eigenschaften zumindest teilweise kompensiert werden.

Die Polyolkomponente **(K1**) und Polyisocyanatkomponente (K2) werden vor der Anwendung getrennt von einander gelagert und erst bei oder unmittelbar vor der Anwendung miteinander gemischt. Die Komponenten sind vorteilhaft in einer Verpackung, welche aus zwei von einander getrennten Kammern besteht, vorhanden und zwar derart, dass die Polyolkomponente **(K1**) in der einen Kammer und die Polyisocyanatkomponente (K2) in der anderen Kammer vorhanden sind. Die Polyolkomponente **(K1**) und Polyisocyanatkomponente **(K2)** werden in die Kammern der Verpackung eingefüllt und luft- und feuchtigkeitsdicht verschlossen.

Bevorzugte derartige Packungen sind einerseits side-by-side Doppelkartuschen oder Koaxialkartuschen, bei denen zwei röhrenförmige Kammern nebeneinander oder ineinander angeordnet sind und mit Kolben luft- und feuchtigkeitsdicht verschlossen sind. Über den Vortrieb dieser Kolben können die Komponenten aus der Kartusche ausgepresst werden. Die den Kolben entgegengesetzten Seiten der Rohre sind, gegebenenfalls über einen Adapter, derart modifiziert, dass die Kammernöffnungen im Bereich der Öffnung über eine Trennwand miteinander direkt verbunden sind. Vorteilhaft ist im Bereich der Austrittsöffnung der Kammern ein Gewinde angebracht, so dass ein Statikmischer oder ein dynamischer Mischer dicht angebracht werden kann. Derartige Packungen werden insbesondere für Kleinanwendungen bevorzugt, insbesondere für Füllmengen bis 1 Liter.

Für grössere Anwendungen, insbesondere für Anwendungen in der industriellen Fertigung, werden die Polyolkomponente **(K1**) und Polyisocyanatkomponente (K2) vorteilhaft in Fässer oder Hobbocks abgefüllt und gelagert. In diesem Falle werden die Komponenten über hydraulische Pressen, insbesondere über Folgeplatten, ausgepresst und über Leitungen einer Mischapparatur, wie sie üblich für Zwei- Komponentenklebstoffe in der industriellen Fertigung üblich eingesetzt werden, zugeführt.

Bei jeglicher Packung ist es wichtig, dass zumindest die Polyisocyanatkomponente **(K2)** luft- und feuchtigkeitsdicht verschlossen ist, so dass beide Komponenten über lange Zeit, d.h. typischerweise länger als 6 Monate, lagerfähig sind.

Es hat sich gezeigt, dass für die Eigenschaften der ausgehärteten zweikomponentigen Polyurethanzusammensetzung das Gewichtsverhältnis von Rizinusöl **(A0)** zu alkoxyliertem aromatischen Diol **(A1)** vorteilhaft 2 oder grösser als 2, insbesondere zwischen 2 und 3, ist.

Weiterhin hat es sich gezeigt, dass für die Eigenschaften der ausgehärteten zweikomponentigen Polyurethanzusammensetzung das Gewichtsverhältnis von der Gewichtssumme von Rizinusöl **(A0)** und alkoxyliertem aromatischen Diol **(A1)** zur Gewichtssumme von Polyol mit 5 bis 8 Hydroxylgruppen **(A2)** und aliphatischem Triol **(A3)** vorteilhaft einen Wert von 1.5 - 3.0 aufweist.

Weiterhin hat es sich gezeigt, dass für die Eigenschaften der ausgehärteten zweikomponentigen Polyurethanzusammensetzung das Gewichtsverhältnis von alkoxyliertem aromatischen Diol **(A1)** zur Gewichtssumme von Rizinusöl **(A0)** und Polyol mit 5 bis 8 Hydroxylgruppen **(A2)** und aliphatischem Triol **(A3)** vorteilhaft einen Wert von 0.1 - 0.5, insbesondere von 0.2 - 0.3, aufweist.

Die zweikomponentige Polyurethanzusammensetzung ist vorzugsweise fliessfähig, kann dabei aber insbesondere auch thixotrope Eigenschaften zeigen. Die ausgehärtete zweikomponentige Polyurethanzusammensetzung weist hohe mechanische Festigkeit auf, insbesondere eine Zugfestigkeit (im vorliegenden Dokumenten wird stets der Wert beim Bruch verwendet), gemessen nach ISO 527-2 von mehr als 12 MPa, bevorzugt von mehr als 15 MPa, sowie meist bevorzugt von mehr als 20 MPa, auf. Typischerweise ist diese Zugfestigkeit jedoch kleiner als 40 MPa. Weiterhin weist die ausgehärtete zweikomponentige Polyurethanzusammensetzung einen hohen E-Modul auf. Dieser beträgt, gemessen nach ISO 527-2, insbesondere mehr als 1400 MPa, bevorzugt von mehr als 1500 MPa, sowie meist bevorzugt von mehr als 1600 MPa. Der E-Modul der erfindungsgemässen Zusammensetzung sollte jedoch kleiner als 2400 MPa, vorzugsweise kleiner als 2000 MPa, sein.

Des Weiteren verfügt die ausgehärtete zweikomponentige Polyurethanzusammensetzung über ein gewisses Ausmass an Elastizität. Insbesondere beträgt die Bruchdehnung, gemessen nach ISO 527-2 mehr als 2 %, bevorzugt mehr als 3 %. Typischerweise ist diese Bruchdehnung jedoch kleiner als 15%.

Somit verfügt die ausgehärtete zweikomponentige Polyurethanzusammensetzung über sehr hohe mechanische Festigkeit, welche es erlaubt, die zweikomponentige Polyurethanzusammensetzung als Klebstoff für strukturelle Verklebungen einzusetzen.

In einem weiteren Aspekt betrifft die Erfindung ein Verfahren zum Verkleben, welches die Schritte umfasst:
- Mischen der Polyolkomponente **(K1**) und der Polyisocyanatkomponente **(K2)** einer zweikomponentigen Polyurethanzusammensetzung, wie sie vorgängig im Detail beschrieben wurde,
- Applizieren der gemischten Polyurethanzusammensetzung auf mindestens eine der zu verklebenden Substratoberflächen,
- Fügen innerhalb der Offenzeit
- Aushärten der Polyurethanzusammensetzung.

Diese Schritte laufen in der angegebenen Reihenfolge ab.

Das Mischen erfolgt typischerweise über Statikmischer oder mit Hilfe von dynamischen Mischern. Beim Mischen ist darauf zu achten, dass die zwei Komponenten möglichst homogen gemischt werden. Werden die zwei Komponenten unvollständig gemischt, treten lokale Abweichungen von dem optimalen Mischungsverhältnis, d.h. im Wesentlichen der optimalen Stöchiometrie, auf, was sich in einer Verschlechterung der mechanischen Eigenschaften der ausgehärteten Polyurethanzusammensetzung auswirkt. Um die Mischqualität auch visuell zu beurteilen, ist es von Vorteil, wenn die Polyolkomponente **(K1)** und der Polyisocyanatkomponente **(K2)** zwei verschiedene Farben aufweisen, die untereinander, aber auch von der Mischung, visuell gut voneinander unterschieden werden können. Ein Beispiel für eine derartige Farbkombination liegt vor, wenn die eine Komponente schwarz und die andere weiss ist. Eine gute Mischung liegt, dann vor, wenn eine homogene graue Farbe vorliegt und keinerlei Streifen oder Muster in hell-oder dunkelgrau oder weiss oder schwarz vorliegen.

Die gemischte Polyurethanzusammensetzung wird auf mindestens einer der zu verklebenden Substratoberfläche appliziert. Das zu verklebende Substrat ist vorzugsweise ein Metall, ein Kunststoff, ein Glas oder eine Keramik oder ein Faserverbundwerkstoff. Es kann sein, dass zwei unterschiedliche Substrate vorhanden sind, welche verklebt werden sollen. Es ist möglich, dass der Fügepartner, d.h. das zweite Substrat, identisch oder unterschiedlich vom ersten Substrat ist.

Somit kann der Klebstoffauftrag auf dem ersten und/oder dem zweiten Fügepartner erfolgen. Nach dem Klebstoffauftrag werden die Fügepartner innerhalb der Offenzeit gefügt. Anschliessend an das Fügen erfolgt die Aushärtung der Polyurethanzusammensetzung.

Das bevorzugte Substrat ist ein Kunststoff, insbesondere ein faserverstärkter Kunststoff.

Ein derartiger faserverstärkter Kunststoff ist ein Verbundwerkstoff bestehend aus Fasern, die in eine Matrix bestehend aus Kunststoff eingebettet sind.

Geeignete Fasern solcher faserverstärkter Kunststoffe sind Fasern, welche ausgewählt sind aus der Liste bestehend aus anorganischen Fasern, insbesondere Glasfasern und Keramikfasern; und organischen Fasern. Vorzugsweise handelt es sich bei den organischen Fasern um Aramidfasern, Polyesterfasern, Nylonfasern, Plexiglasfasern, Fasern aus einem Homo- oder Copolymeren von Ethylen und/oder Propylen, Naturfasern, Textilfasern und Kohlenstofffasern. Am meisten bevorzugt handelt es sich um Kohlenstofffasern.

Die Fasern können hierbei Kurzfasern oder Langfasern, gesponnene, gewebte oder ungewebte Fasern oder Filamente sein. Weiterhin können die Fasern gerichtete oder gestreckte Fasern sein. Weiterhin kann es vorteilhaft sein, unterschiedliche Fasern, sowohl in Geometrie als auch Zusammensetzung, miteinander zu verwenden. Die Fasern werden insbesondere als Gewebe, Gelege oder Gewirke oder Matten oder Vliese oder Rovings eingesetzt. Die hierbei zwischen den Fasern vorhandenen Zwischenräume werden durch eine Kunststoffmatrix aufgefüllt. Geeignete Kunststoffmatrices sind ausgewählt aus der Liste bestehend aus Epoxidharz, ungesättigtem Polyesterharz, Vinylesterharz, Phenol-Formaldehydharz, Diallylphthalatharz, (Meth-)acrylat-harz, Polyurethan, Aminoharze, Melaminharz und Harnstoffharz. Insbesondere bevorzugt als Kunststoffmatrix ist Epoxidharz.

Ein besonders bevorzugtes zu verklebendes Substrat stellt ein Formteil auf Basis Glasfasern und/oder Kohlefasern in einer Polyester- oder Polyepoxidmatrix dar. Derartige Formteile können durch verschiedene Prozesse in bekannter Art und Weise aus einem Polyester- oder Polyepoxid sowie Glasfasern und/oder Kohlefasern hergestellt werden. Derartige Formteile sind beispielsweise im Flugzeugbau, im Bootsbau oder bei anderen mechanisch hoch belasteten Bauteilen eingesetzt. Ein besonderes Anwendungsgebiet solcher verklebter Substrate sind Rotorblätter für Windkraftanlagen. Auch die Herstellverfahren für solche Formteile sind dem Fachmann bekannt.

Solche Rotorblätter für Windkraftanlagen werden beispielsweise in Hohlformen hergestellt und ausgehärtet. Dabei ist die Form häufig als halbseitige Form ausgeführt. Die der Form zugewandte Seite wird im Allgemeinen in einer glatten, einsatzbereit ausgeführten Oberfläche erhalten, die andere Seite kann und soll üblicherweise noch bearbeitet werden. Dabei werden in der weiteren Herstellung der Flügel zwei oder mehr dieser Substrate miteinander verklebt. Zusätzlich werden die Flügel durch das Einbringen einer Tragwerkstruktur mechanisch verstärkt. Der erfindungsgemässe Klebstoff gewährleistet dabei die Verbindung der Halbschalenprofile und der Tragwerkstruktur. Als zu verklebende Seite wird im Allgemeinen die der Form abgewandte Seite eingesetzt. Die Oberfläche soll vorzugsweise so ausgebildet sein, dass die zu verklebenden Substratteile angenähert eine Passform aufweisen. Die zum Verkleben vorgesehene Oberfläche kann rau und in sich uneben sein. Ein Schleifen oder Fräsen auf eine exakte spiegelbildliche Form zu dem zu verklebenden Gegenstück ist erfindungsgemäss nicht notwendig. Bei Verwendung des erfindungsgemässen Klebstoffs ist auch eine Vorbehandlung der zu verklebenden Oberflächen nicht notwendig. Eine staubund fettfreie Oberfläche ist zum Auftragen des Klebstoffs ausreichend, der Einsatz von Primern ist nicht erforderlich.

Eine bekannte Arbeitsweise ist derart, dass die Oberflächen an der äusseren Seite der Formteile nach dem Herstellen der Teile in der Form zur Vernetzung mit einem reissfesten Schutzgewebe abgedeckt werden. Dieses kann unmittelbar vor der späteren Verklebung vollständig abgezogen werden und so eine geeignete Oberfläche ergeben. Es ist aber auch möglich, solche Oberflächen mechanisch grob zu bearbeiten und an das entsprechende Gegenstück anzupassen. Auf die so vorbereiteten und von losen Teilen und Staub befreiten Oberflächen der Substrate kann dann der erfindungsgemässe Klebstoff aufgetragen werden.

Die beschriebene zweikomponentige Polyurethanzusammensetzung weist eine Offenzeit auf, welche besonders gut geeignet ist für das Verkleben von grossen Fügenteilen bzw. Formteilen. Die Offenzeit beschriebt denjenigen Zeitraum, innerhalb dessen nach dem Mischen der zwei Komponenten und anschliessender Applikation der Klebstoffes das Fügen der Substratteile noch möglich ist, bevor der Klebstoff soweit abreagiert hat, dass er nicht mehr zum Aufbau eines Klebverbunds befähigt ist.

Es lassen sich mit den erfindungsgemässen ausgehärteten Zusammensetzungen Glasübergangstemperaturen, gemessen nach ISO 11357, von mehr als 50°C, insbesondere von mehr als 55°C, erhalten.

Typischerweise verfügt die zweikomponentige Polyurethanzusammensetzung bei Raumtemperatur und 50% rel. Luftfeuchtigkeit über eine Offenzeit von mehr als 60 Minuten, insbesondere von zwischen 60 Minuten und 4 Stunden.

Es ist ein besonders grosser Vorteil der vorliegenden Erfindung, dass die Offenzeit selbst bei grosser Luftfeuchtigkeitfeuchtigkeit, beispielsweise 70% relativer Luftfeuchtigkeit, noch sehr lang, d.h. mindestens 60 Minuten, beträgt. Dies ist aufgrund der bekannten Reaktion von Wasser und Isocyanaten für den Fachmann doch sehr überraschend.

Diese Eigenschaft erlaubt es, grossflächige Verklebungen, wie sie beispielsweise in Fabrikhallen beim Bau von Rotorblättern für Windkraftanlagen vorkommen, weitgehend unabhängig von der Luftfeuchtigkeit verlässlich zu realisieren. Es ist hierbei selbstverständlich wichtig, dass durch die hohe Luftfeuchtigkeit bedingt, die mechanischen Eigenschaften nicht allzu stark verschlechtert werden.

Aus dem vorgängig beschriebenen Verfahren resultiert ein verklebter Artikel, welcher insbesondere ein verklebtes Rotorblatt für den Einsatz in Windkraftanlagen darstellt.

Die vorgängig beschriebene zweikomponentige Polyurethanzusammensetzung lässt sich somit besonderes gut als Klebstoff, insbesondere als struktureller Klebstoff, verwenden. Typische Bespiele für Anwendungen derartiger Klebstoffe finden sich in Bauwerken, Automobilen, Fahrzeugen oder Schiffen oder Windkraftanlagen. Hierbei ist der ausgehärtete Klebstoff ein Teil einer tragenden Struktur und bildet somit ein wichtiges Bindeglied, an dessen mechanischen Eigenschaften hohe Ansprüche gestellt werden. Die vorliegende Erfindung erfüllt diese hohen Ansprüche bestens.

### Beispiele

Die folgenden Beispiele sollen die vorliegende Erfindung illustrieren: Die Beispiele sollen jedoch nicht als die Erfindung limitierend betrachtet werden.

Die in Tabelle 1 beispielhaft angeführten Zusammensetzungen ***1*** und 2 sowie ***Ref. 1*** bis ***Ref.*** 5 als Referenzbeispiele weisen alle dieselbe Komponente K2 auf.

Zur Herstellung der Komponenten **K1** wurde die Polyolmischung in einem Vakuumdissolver vorgelegt und nach Zugabe von Katalysator und Trocknungsmittel unter Ausschluss von Feuchtigkeit während 20 Minuten bei 25°C gerührt. Anschliessend wurden diese Polypolkomponenten **K1** in luft- und feuchtigkeitsdichte Kartuschen abgefüllt.

Bei Komponente **K2** wurde die Polyisocyanatkomponente **B1** in eine luft- und feuchtigkeitsdichte Kartusche abgefüllt.

Die Komponenten **K1** und **K2** wurden im Gewichtsverhältnis von **K1** : **K2** wie in Tabelle 1 ausgeführt mittels Statikmischer vermischt (entsprechend einem NCO / OH-Verhältnis von 1.1).

### Messungen

### E-Modul, Zugfestigkeit und Bruchdehnung

Die gemischten Komponenten **K1** und K2 wurden gemischt, und unmittelbar nach der Mischung wurden daraufhin Hanteln gemäss ISO 527, Teil 2, 1 B (ISO 527-2) hergestellt, diese während 24 h bei 25°C und anschliessend während 72 h bei 60°C gehärtet. Nach einer Konditionierungszeit von 24h bei 25°C wurden E-Modul, Zugfestigkeit und Bruchdehnung der so hergestellten Probekörpern gemäss ISO 527-2 auf einer Zwick Z020 Zugprüfmaschine bei einer Prüftemperatur von 20°C und einer Prüfgeschwindigkeit 2 mm/min gemessen.

### Zugscherfestigkeit

Die gemischten Komponenten **K1** und **K2** wurden gemischt und auf das erste Plättchen von Glasfaserverstärktem Epoxidharz (GRE) appliziert wurde und anschliessend sofort bzw. nach 40 bzw. 60 Minuten nach Exposition (*tₑₓₚ*) bei 25 °C und 70% relativer Luftfeuchtigkeit weiter mit der Herstellung des Zugscherfestigkeitsprüfkörper (Kontaktieren mit zweitem Glasfaserverstärktem Epoxidharz-Plättchen, Verpressen, Klebstoffdicke 2 mm) fortgefahren. Der Klebstoff wurde dann während 24 h bei 25°C und anschliessend während 72 h bei 60 °C gehärtet und die Zugscherfestigkeit nach ISO 527 nach einer Konditionierungszeit von 24h bei 25°C gemessen.

Vom Beispiel ***1*** und Beispiel **2** wurden zudem noch die Topfzeit, sowie die Glasübergangstemperatur (Tg) nach ISO 11357 gemessen. Die Zugscherfestigkeitsprüfkörper wurden so hergestellt, dass der gemischte Klebstoff auf das erste Plättchen appliziert wurde und anschliessend 40 bzw. 60 Minuten (*tₑₓₚ*) nach Exposition bei 25 °C und 70% relativer Luftfeuchtigkeit gelagert wurde, bis zur Fertigstellung der Zugscherfestigkeitsprüfkörper das zweite Plättchen mit dem Klebstoff kontaktiert wurde. Der Klebstoff wurde dann während 24 h bei 25°C und anschliessend während 72 h bei 60°C gehärtet und die Zugscherfestigkeit nach einer Konditionierungszeit von 24h bei 25°C gemessen.

**Tabelle 1. Zusammensetzungen und Messresultate.**

| **Beispiele** | | ***1*** | ***2*** | ***Ref.1*** | ***Ref. 2*** | ***Ref. 3*** | ***Ref. 4*** | ***Ref.** 5* |
|---|---|---|---|---|---|---|---|---|
| Komponente **K1** | | ***A1*** (GT³) | ***A2*** (GT³) | ***RefA1*** (GT³) | ***RefA2*** (GT³) | ***RefA3*** (GT³) | ***RefA4*** (GT³) | ***RefA5*** (GT³) |
| Rizinusöl | **A0** | 16 | 16 | 16 | 16 | | | 16 |
| Propoxyliertes Bisphenol-A *(TAG=3)* | **A1** | 7 | 7 | | | 21 | 21 | 7 |
| Polyetherpolyol basierend auf Sorbitol mit 6 Hydroxylgruppen (Hydroxylzahl 490 mg KOH/g) | **A2** | 8 | 8 | 8 | 8 | 8 | 8 | 0 |
| butoxyliertes Trimethylolpropan (Hydroxylzahl 260 mg KOH/g) | **A3** | 6 | | 6 | | 18 | 18 | 6 |
| Sovermol® 805 | **A4** | 31.3 | 31.3 | 31.3 | 31.3 | | 31.3 | 31.3 |
| Zeolith (Trocknungsmittel) | | 6 | 6 | 6 | 6 | 6 | 6 | 6 |
| Kreide | | 22 | 22 | 22 | 22 | 22 | 22 | 22 |
| Pyrogene Kieselsäure | | 1.5 | 1.5 | 1.5 | 1.5 | 1.5 | 1.5 | 1.5 |
| 4,4'-Methylenebis(2,6-diethylanilin) | **PA** | 2.2 | 2.2 | 2.2 | 2.2 | 2.2 | 2.2 | 2.2 |
| Total | | 100 | 94 | 93 | 87 | 78.7 | 110.0 | 92 |
| | | | | | | | | |
| Komponente **K2** | | (GT³) | (GT³) | (GT³) | (GT³) | (GT³) | (GT³) | (GT³) |
| Desmodur® VKS20F | **B1** | 100 | 100 | 100 | 100 | 100 | 100 | 100 |
| Mischungsverhältnis K1/K2 [Gew./Gew.] | | 100/40 | 100/38,2 | 100/37,5 | 100/35,4 | 100/47,8 | 100/46,9 | 100/32,4 |
| | | | | | | | | |
| Zugfestigkeit [MPa] | | 37,0 | 36,8 | 27,9 | 26,1 | 25,4 | 48,2 | 18,18 |
| Bruchdehnung [%] | | 3.5 | 3.9 | 9.1 | 8.5 | 1.1 | 2,5 | 31,5 |
| E-Modul [MPa] | | 1707 | 1759 | 1329 | 1194 | 2466 | 2099 | 222 |
| | | | | | | | | |
| *tₑₓₚ*: 0 Min. (25°C, 70% rel. LF¹) | | | | | | | | |
| Zugscherfestigkeit [MPa] | | 12,0 | 10.4 | 10.7 | 16,1 | 11.8 | 11,6 | 15,5 |
| *tₑₓₚ*: 40 Min. (25°C, 70% rel. LF¹) | | | | | | | | |
| Zugscherfestigkeit [MPa] | | 9.9 | 8.3 | 9.0 | 11.5 | 4.9 | 7,7 | 14,2 |
| *Tₑₓₚ*: 60 Min. (25°C, 70% rel. LF¹) | | | | | | | | |
| Zugscherfestigkeit [MPa] | | 6.9 | 5.2 | 5.5 | 10.9 | 2 - | 3,3 | 12,0 |
| *Tg* [°C] | | 57 | 55,5 | n.g.⁴ | n.g.⁴ | n.g.⁴ | n.g.⁴ | n.g.⁴ |
| Topfzeit [min.] | | 63 | 57 | n.g.⁴ | n.g.⁴ | n.g.⁴ | n.g.⁴ | n.g.⁴ |

| | | | | | | | | |
|---|---|---|---|---|---|---|---|---|
| ¹ rel. LF= relative Luftfeuchtigkeit ² nicht messbar, zu brüchig ³ GT= Gewichtsteile ⁴ nicht gemessen | | | | | | | | |

Der Vergleich von Beispiel ***1*** und ***Ref.*** 1 bzw. 2 und ***Ref.2*** zeigt, dass die Anwesenheit vom alkoxyliertem aromatischen Diol einen signifikanten Einfluss auf die Mechanik, d.h. Zugfestigkeit und E-Modul ausübt. Weiterhin zeigt der Vergleich von Beispiel ***1*** und ***Ref.*** 3, respektive ***Ref.*** 4, dass einerseits bereits bei Normklima (25°C, 100% rel. LF.) die Mechanik verschlechtert wird, indem (zum Beispiel) im Fall von ***Ref.** 3* die Zugfestigkeit gegenüber Beispiel 1 sinkt, zusätzlich bei ***Ref.** 3* und ***Ref. 4*** die Bruchdehnung stark erniedrigt wird, und andererseits bei ***Ref.** 3* und ***Ref. 4*** der E-Modul deutlich ansteigt, wenn in der Formulierung der Komponente ***K1*** kein Rizinusöl vorhanden ist, und dass darüber hinaus vor allem bei langer Feuchtigkeitsexposition im Fall von ***Ref.** 3* keine Messresultate für die Zugscherfestigkeit der Prüfkörper mehr erhalten werden konnten und sich die Messresultate für die Zugscherfestigkeit der Prüfkörper im Fall von ***Ref. 4*** stark verschlechtern. Die Reaktion der Isocyanat-Gruppen mit Wasser war bei diesen Prüfkörpern nach 60 Minuten Exposition gegenüber der Feuchtigkeit deshalb bereits so weit fortgeschritten, dass nach 60 Minuten Exposition die Offenzeit von ***Ref.* 3** bereits überschritten war. Es zeigte sich jedoch auch bereits nach 40 Minuten Exposition gegenüber Feuchtigkeit, dass ***Ref. 3*** massiv schlechtere Mechanikwerte als das entsprechende Beispiel ***1*** aufwies.

Der Vergleich von Beispiel ***1*** und ***2*** zeigt zudem, dass durch den Einsatz eines aliphatischen Triols die bereits ausgezeichneten Eigenschaften des Beispiels ***2*** nochmals verbessert werden können.

## Patentansprüche

1. Zweikomponentige Polyurethanzusammensetzung bestehend aus einer Polyolkomponente **(K1**) und einer Polyisocyanatkomponente **(K2);** wobei die Polyolkomponente **(K1**)
Rizinusöl **(A0)**;
mindestens ein alkoxyliertes aromatisches Diol **(A1);** und
mindestens ein Polyol mit 5 bis 8 Hydroxylgruppen **(A2);**
umfasst,
und wobei die Polyisocyanatkomponente **(K2)**
mindestens ein Polyisocyanat **(B1**)
umfasst.

2. Zweikomponentige Polyurethanzusammensetzung gemäss Anspruch 1, **dadurch gekennzeichnet, dass** das alkoxylierte aromatische Diol **(A1)** ein ethoxyliertes und/oder ein propoxyliertes aromatisches Diol ist.

3. Zweikomponentige Polyurethanzusammensetzung gemäss Anspruch 2, **dadurch gekennzeichnet, dass** das alkoxylierte aromatische Diol **(A1)** die Formel (I) aufweist 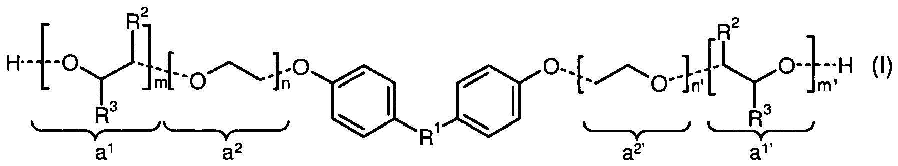
wobei R¹ = CH₂, CH(CH₃) oder C(CH₃)₂ darstellt,
R² = H und R³ = Methyl oder R² = Methyl und R³ = H darstellen, sowie n+n'+m+m' = 1 bis 20, insbesondere n+n'+m+m' = 1 bis 8, sind, und die gestrichelte Linien darstellen, dass die Abfolge der aneinander gebundenen Alkylenglykol-Segmente a¹, a^{1'}, a² und a^{2'} variabel ist.

4. Zweikomponentige Polyurethanzusammensetzung gemäss Anspruch 3, **dadurch gekennzeichnet, dass** n=n'=0 ist.

5. Zweikomponentige Polyurethanzusammensetzung gemäss einer der vorhergehenden Ansprüche, **dadurch gekennzeichnet, dass** das Polyol mit 5 bis 8 Hydroxylgruppen **(A2)** ein Polyetherpolyol basierend auf einem Zucker, insbesondere auf Sorbitol, ist.

6. Zweikomponentige Polyurethanzusammensetzung gemäss einer der vorhergehenden Ansprüche, **dadurch gekennzeichnet, dass** die zweikomponentige Polyurethanzusammensetzung weiterhin mindestens ein aliphatisches Triol **(A3)** enthält.

7. Zweikomponentige Polyurethanzusammensetzung gemäss einer der vorhergehenden Ansprüche, **dadurch gekennzeichnet, dass** das aliphatisches Triol **(A3)** ein alkoxyliertes aliphatisches Triol, insbesondere mit einem Molekulargewicht zwischen 500 und 1000 g/mol, ist.

8. Zweikomponentige Polyurethanzusammensetzung gemäss einem der vorhergehenden Ansprüche, **dadurch gekennzeichnet, dass** die Polyolkomponente **(K1**) weiterhin mindestens ein Polyamin **(PA)**in einer Menge von 0.5 bis 5 Gew.-%, bevorzugt von 1.5 -bis 2.5 Gew.-%, enthält

9. Zweikomponentige Polyurethanzusammensetzung gemäss einem der vorhergehenden Ansprüche, **dadurch gekennzeichnet**, das Polyisocyanat **(B1)** ein aromatisches Polyisocyanat ist.

10. Zweikomponentige Polyurethanzusammensetzung gemäss einer der vorhergehenden Ansprüche, **dadurch gekennzeichnet, dass** die Polyolkomponente **(K1**) enthält:
10 - 25 Gew.-% Rizinusöl **(A0)**;
8 - 15 Gew.-% alkoxyliertes aromatisches Diol **(A1**)
1 - 10 Gew.-% Polyol mit 5 bis 8 Hydroxylgruppen **(A2);**
0 - 25 Gew.-%, bevorzugt 7 - 25 Gew.-%, aliphatisches Triol **(A3).**

11. Verfahren zum Verkleben umfassend die Schritte
- Mischen der Polyolkomponente **(K1)** und der Polyisocyanatkomponente **(K2)** einer zweikomponentigen Polyurethanzusammensetzung gemäss einem der Ansprüche 1 bis 10,
- Applizieren der gemischten Polyurethanzusammensetzung auf mindestens eine der zu verklebenden Substratoberfläche,
- Fügen innerhalb der Offenzeit
- Aushärten der Polyurethanzusammensetzung.

12. Verfahren gemäss Anspruch 11, **dadurch gekennzeichnet, dass** das zu verklebende Substrat ein Kunststoff, insbesondere ein faserverstärkter Kunststoff, ist.

13. Verfahren gemäss Anspruch 11 oder 12, **dadurch gekennzeichnet, dass** das zu verklebende Substrat ein Formteil auf Basis Glasfasern und/oder Kohlefasern in einer Polyester- oder Polyepoxidharzmatrix ist.

14. Verklebter Artikel, welcher nach einem Verfahren gemäss einem der Ansprüche 11 bis 13 verklebt wurde.

15. Verwendung einer zweikomponentigen Polyurethanzusammensetzung gemäss einem der Ansprüche 1 bis 10 als Klebstoff, insbesondere als struktureller Klebstoff.

16. Verwendung gemäss Anspruch 15 als Klebstoff für den Bau von Rotorblättern für Windkraftanlagen.

## Claims

1. A two-component polyurethane composition consisting of a polyol component **(K1)** and a polyisocyanate component **(K2);**
whereby the polyol component **(K1)** comprises
castor oil **(A0)**;
at least one alcoxylated aromatic diol **(A1);** and
at least one polyol with 5 to 8 hydroxyl groups **(A2),**
and whereby the polyisocyanate component **(K2)**
comprises at least one polyisocyanate **(B1).**

2. The two-component polyurethane composition according to claim 1, **characterized in that** the alkoxylated aromatic diol **(A1)** is an ethoxylated and/or a propoxylated aromatic diol.

3. The two-component polyurethane composition according to claim 2, **characterized in that** the alkoxylated aromatic diol (A1) has the formula (I) 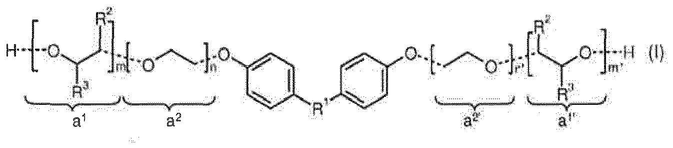
in which R¹ = CH₂, CH(CH₃) or C(CH₃)₂,
R² = H and R³ = methyl or R² = methyl and R³ = H and n+n'+m+m' = 1 to 20, in particular n+n'+m+m' = 1 to 8, and the dotted lines show that the sequence of the alkylene glycol segments a¹, a^{1'} and a² and a^{2'}, that are connected to each other, is variable.

4. The two-component polyurethane composition according to claim 3, **characterized in that** n=n'=0.

5. The two-component polyurethane composition according to one of the previous claims, **characterized in that** the polyol with 5 to 8 hydroxyl groups (A2) is a polyetherpolyol based on a sugar, in particular on sorbitol.

6. The two-component polyurethane composition according to one of the previous claims, **characterized in that** the two-component polyurethane composition furthermore contains at least one aliphatic triol **(A3).**

7. The two-component polyurethane composition according to one of the previous claims, **characterized in that** the aliphatic triol **(A3)** is an alkoxylated aliphatic triol, in particular with a molecular weight between 500 and 1,000 g/mol,

8. The two-component polyurethane composition according to one of the previous claims, **characterized in that** the polyol component **(K1)** furthermore contains at least one polyamine **(PA)** in an amount of 0.5 to 5 wt%, preferably 1.5 to 2.5 wt%.

9. The two-component polyurethane composition according to one of the previous claims, **characterized in that** the polyisocyanate **(B1)** is an aromatic polyisocyanate.

10. The two-component polyurethane composition according to one of the previous claims, **characterized in that** the polyol component **(K1)** contains:
10 - 25 wt% castor oil **(A0),**
8 - 15 wt% alcoxylated aromatic diol **(A1)**
1 - 10 wt% polyol with 5 to 8 hydroxyl groups (A2),
0 - 25 wt%, preferably 7 - 25 wt% aliphatic triol **(A3).**

11. A method of adhesion comprising the steps
- Mixing the polyol component **(K1)** and the polyisocyanate component **(K2)** of a two-component polyurethane composition according to one of claims 1 to 10,
- Applying the mixed two-component polyurethane composition onto at least one of the substrate surfaces to be adhered,
- Joining within the open time,
- Curing the polyurethane composition.

12. The method according to claim 11, **characterized in that** the substrate to be adhered is a plastic, in particular a fiber-reinforced plastic.

13. The method according to claim 11 or 12, **characterized in that** the substrate to be adhered is a mold part based on glass fibers and/or carbon fibers in a polyester matrix or polyepoxide matrix.

14. An adhered article that was adhered according to a method in accordance with one of claims 11 to 13.

15. The use of a two-component polyurethane composition according to one of claims 1 to 10 as adhesive, in particular as a structural adhesive.

16. The use according to claim 15 as an adhesive for the construction of rotor blades for wind power plants.

## Revendications

1. Composition de polyuréthane à deux composants constituée d'un composant polyol **(K1)** et d'un composant polyisocyanate **(K2) ;**
moyennant quoi le composant polyol(**K1**) comprend
de l'huile de ricin **(A0)** ;
au moins un diol aromatique alcoxylé **(A1)** ; et
au moins un polyol comptant 5 à 8 groupes hydroxyle **(A2),**
et moyennant quoi le composant polyisocyanate **(K2)**
comprend au moins un polyisocyanate **(B1).**

2. Composition de polyuréthane à deux composants selon la revendication 1, **caractérisée en ce que** le diol aromatique alcoxylé **(A1)** est un diol aromatique éthoxylé et/ou propoxylé.

3. Composition de polyuréthane à deux composants selon la revendication 2, **caractérisée en ce que** le diol aromatique alcoxylé **(A1)** répond à la formule (I) 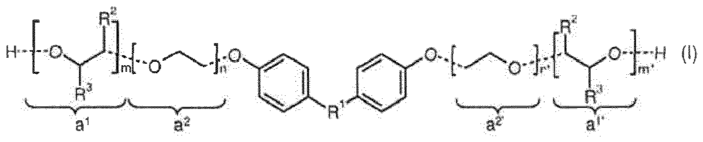
dans laquelle R' = CH₂, CH(CH₃) ou C(CH₃)₂,
R² = H et R³ = méthyle ou R² = méthyle et R³ = H et n+n'+m+m' = 1 à 20, en particulier n+n'+m+m' = 1 à 8, et les lignes pointillées montrent que la séquence des segments d'alkylène glycol a', a^{1'} et a² et a^{2'}, qui sont reliés mutuellement, est variable.

4. Composition de polyuréthane à deux composants selon la revendication 3, **caractérisée en ce que** n = n' = 0.

5. Composition de polyuréthane à deux composants selon l'une des revendications précédentes, **caractérisée en ce que** le polyol comportant 5 à 8 groupes hydroxyle **(A2)** est un polyétherpolyol basé sur un sucre, en particulier sur un sorbitol.

6. Composition de polyuréthane à deux composants selon l'une des revendications précédentes, **caractérisée en ce que** la composition de polyuréthane à deux composants contient en outre au moins un triol aliphatique **(A3).**

7. Composition de polyuréthane à deux composants selon l'une des revendications précédentes, **caractérisée en ce que** le triol aliphatique **(A3)** est un triol aliphatique alcoxylé, en particulier avec une masse moléculaire comprise entre 500 et 1 000 g/mol.

8. Composition de polyuréthane à deux composants selon l'une des revendications précédentes, **caractérisée en ce que** le composant polyol **(K1)** contient au moins une polyamine **(PA)** en quantité comprise entre 0,5 et 5 % en poids, de préférence 1,5 à 2,5 % en poids.

9. Composition de polyuréthane à deux composants selon l'une des revendications précédentes, **caractérisée en ce que** le polyisocyanate **(B1)** est un polyisocyanate aromatique.

10. Composition de polyuréthane à deux composants selon l'une des revendications précédentes, **caractérisée en ce que** le composant polyol **(K1)** contient :
10 à 25 % en poids d'huile de ricin **(A0),**
8 à 15 % en poids de diol aromatique alcoxylé **(A1)**
1 à 10 % en poids de polyol avec 5 à 8 groupes hydroxyle **(A2),**
0 à 25 % en poids, de préférence 7 à 25 % en poids triol aliphatique **(A3).**

11. Procédé d'adhésion comprenant les étapes
- Mélange du composant polyol **(K1)** et du composant polyisocyanate **(K2)** d'une composition de polyuréthane à deux composants selon l'une des revendications 1 à 10,
- Application de la composition mélangée de polyuréthane à deux composants sur au moins une des surfaces de substrat à faire adhérer,
- Jonction pendant le temps imparti,
- Durcissement de la composition de polyuréthanne.

12. Procédé selon la revendication 11, **caractérisé en ce que** le substrat qui doit adhérer est une matière plastique, en particulier une matière plastique renforcée en fibres.

13. Procédé selon la revendication 11 ou 12, **caractérisé en ce que** le substrat qui doit adhérer est une pièce de moule à base de fibres de verre et/ou de fibres de carbone dans une matrice de polyester ou dans une matrice de polyépoxyde.

14. Article ayant adhéré qu'on a fait adhérer selon un procédé conforme à l'une des revendications 11 à 13.

15. Emploi d'une composition de polyuréthane à deux composants selon l'une des revendications 1 à 10 en tant qu'adhésif, en particulier sous forme d'adhésif de structure.

16. Emploi selon la revendication 15 en tant qu'adhésif pour la construction d'ailettes de rotor destinées à des éoliennes.
